# EUROPEAN PATENT SPECIFICATION

(11) **EP 1 719 718 B1**
(45) Date of publication and mention of the grant of the patent: **16.03.2011**
(21) Application number: 05111058.3
(22) Date of filing: 22.11.2005
(51) Int. Cl.: B65G 23/04, B65G 23/06, F16H 55/12, F16H 55/30

(54) **Sprocket particularly for conveyor belts or chains**
Zahnrad insbesondere für ein Förderband oder eine Förderkette
Pignon en particulier pour des courroies ou des chaînes de transport

(30) Priority: 04.05.2005 IT TV20050061
(43) Date of publication of application: 08.11.2006
(73) Proprietor: Habasit AG, 4153 Reinach (CH)
(72) Inventor: FANDELLA, Sergio, 31021, MOGLIANO VENETO TV (IT)
(74) Representative: Bohest AG

(56) References cited:
- DE-U1- 9 311 036
- NL-A- 8 501 246
- US-A- 3 005 356
- US-A- 5 702 316

## Description

The present invention relates to a modular sprocket, particularly for conveyor belts or chains.

Sprockets provided with a substantially cylindrical hub, which can be keyed to a shaft, are currently used particularly for driving conveyor belts or chains.

In particular, US-5,702,316 discloses a modular sprocket, which can be keyed to a shaft and comprises a spur gear obtained by joining two spur halves, which are substantially semicircular and between which there is, once they are mutually associated, a substantially cylindrical opening in which it is possible to arrange a hub, which can be divided into two semicylindrical hub halves and can be keyed to said shaft.

First through holes are formed radially in the spur halves, starting from some of the grooves formed between the pairs of consecutive teeth, and are faced by second threaded holes, which are formed radially in the outer lateral surface of the hub.

The two hub halves can be rigidly coupled to each other and to the hub, thus constituting the sprocket, by inserting in their first holes detachable fixing means, such as for example screws, which can be screwed into the second holes formed within the hub.

The two semicylindrical hub halves, which are substantially mirror-symmetrical, are kept joined during use by the two spur halves that enclose them.

The use of these known types of modular sprocket allows to use a same hub together with spur gears having different outside diameters and vice versa to use a same spur gear together with a plurality of hubs which have the same outside diameter and can be keyed to shafts of different diameters; this allows to reduce the production and storage costs of these sprockets.

It is further possible to assemble a hub and a spur gear made of two different materials, thus achieving a chosen combination of the different mechanical characteristics of the two materials.

The main drawback of these known types of sprocket is the particular substantially cylindrical shape of the hub, which has to be fixed to the spur halves by means of the screws or pins associated with the first and second holes.

In order to obtain the first and second holes, it is necessary to perform machining after the molding of the spur halves and hub halves, thus increasing the production costs of these modular sprockets.

Another drawback of known types of sprocket is that the first and second holes formed radially within the spur gear and the hub halves require high precision for their manufacture and constitute weak points which facilitate the formation of cracks or fractures, which over time can lead to the breakage of the spur halves or of the hub halves.

Another drawback is that the presence of the first holes formed in the grooves provided between the teeth of the spur gear constitute receptacles for dust or residues of the conveyed product; further, any loosening of the screws can cause vibrations, and if the head of said screws affects the curved surface that blends two consecutive teeth, it can cause jammings between said surface and the conveyor belt or chain with which it is associated, thus causing discontinuities in the motion of said chain or belt.

NL-A-8 501 246 disloses a split chain wheel according to the preamble of claim 1, with two wheel halves of identical Z-shaped cut-out shape that fit around and be releasably secured to a central diagonally parted square hub. Each wheel half is provided with a stepped bore extending from its perimeter in a direction parallel to the two parallel sides of the cut-out and is aligned with a screw bore in the hub member to secure the half by a screw.

The aim of the present invention is to solve the above-mentioned problems, eliminating the drawbacks of the cited background art, by providing a sprocket and a hub which can be mutually assembled and keyed to a shaft easily and rapidly, at the same time reducing the manufacturing and assembly costs.

Within this aim, an object of the invention is to provide a modular sprocket which allows to achieve optimum, rapid and safe interconnection between the sprocket and the hub.

Another object is to obtain a sprocket the components of which are simple, safe and quick to assemble even on the part of personnel that is not particularly trained.

Another object is to provide a sprocket which, once assembled and put to use, is free from problems related to jamming with a conveyor belt or chain associated therewith.

Another object of the invention is to obtain a modular sprocket in which the locking of the hub with respect to the spur gear can be achieved simply and rapidly.

Another object is to provide a sprocket which does not require to be subjected, for its manufacture, to mechanical machinings which might weaken its structure, consequently reducing its operating lifespan.

Another object is to provide a sprocket which is structurally simple and can be manufactured with conventional systems and machines, thus having low production costs.

In accordance with the invention, there is provided a modular sprocket, particularly for conveyor belts or chains, as defined in the appended claims.

Further characteristics and advantages of the invention will become better apparent from the following detailed description of a particular but not exclusive embodiment thereof, illustrated by way of non-limiting example in the accompanying drawings, wherein:

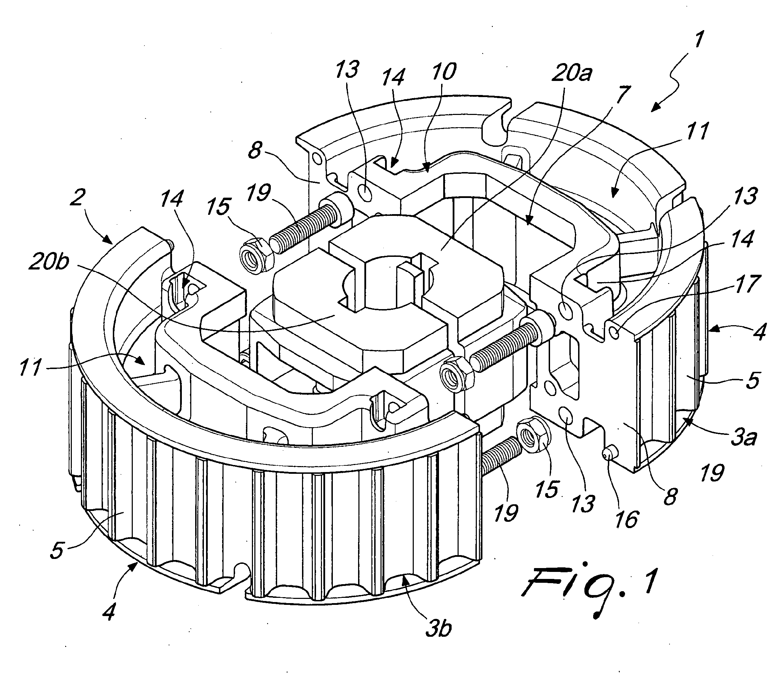

Figure 1 is a perspective exploded view of a sprocket according to the invention;

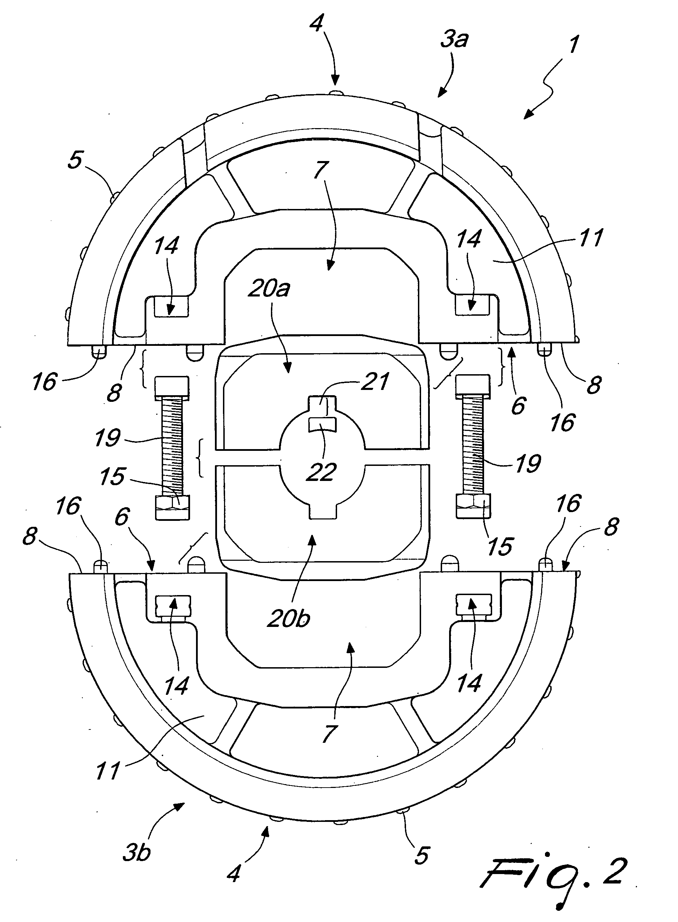

Figure 2 is an exploded side view of a sprocket according to the invention;

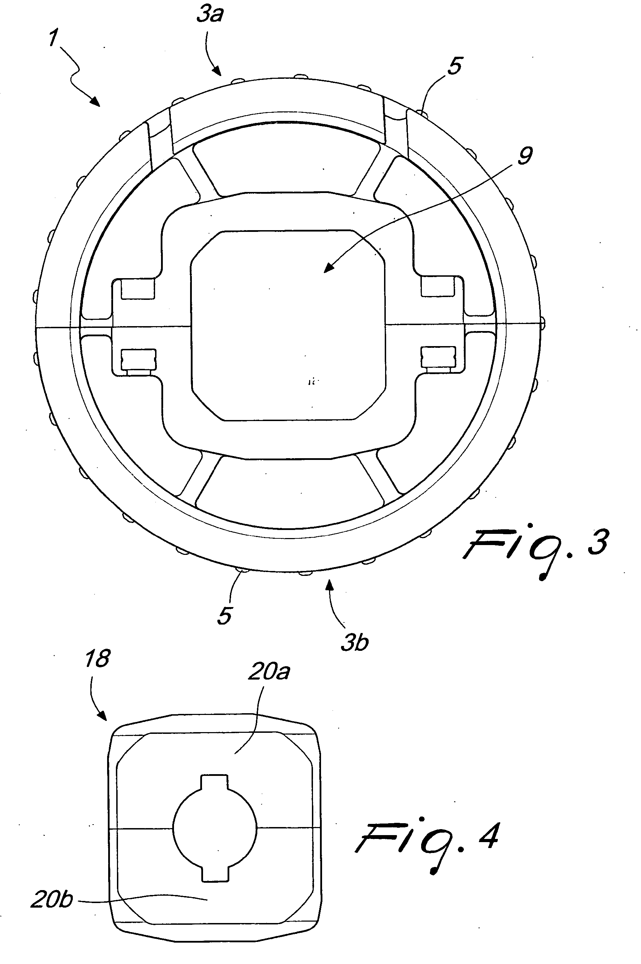

Figure 3 is a side view of the assembled sprocket;
Figure 4 is a side view of the assembled hub;

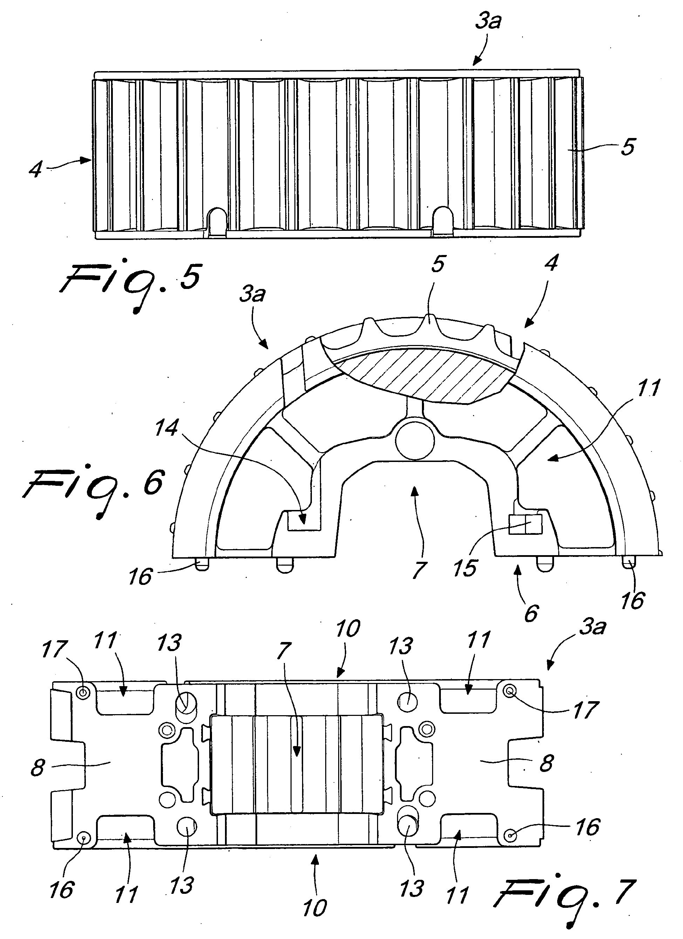

Figure 5 is a front view of a spur half;
Figure 6 is a partially sectional side view of a spur half;
Figure 7 is a bottom view of the spur half of Figure 6;

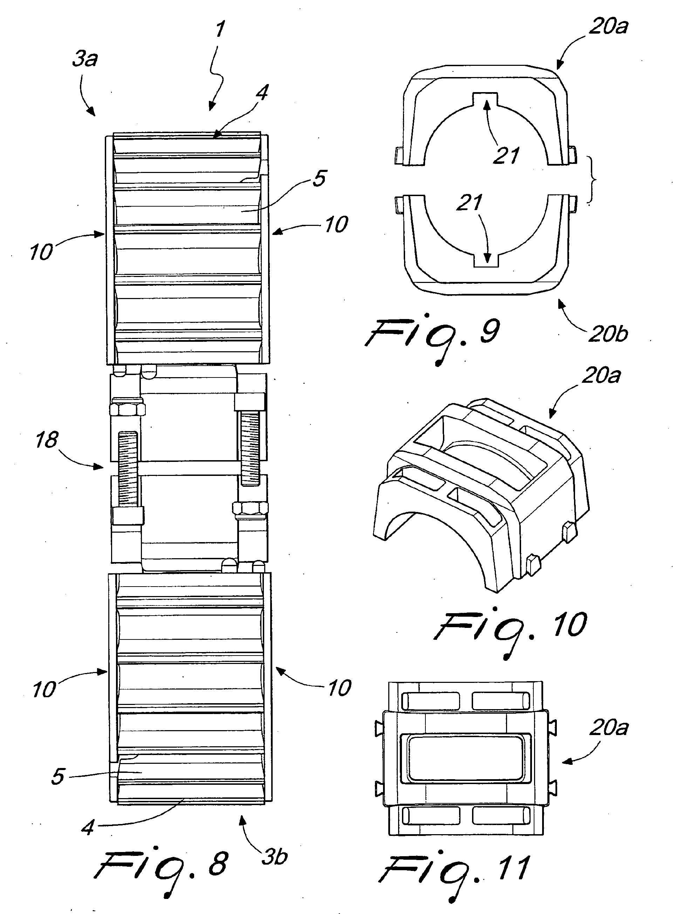

Figure 8 is a front view of the two spur halves, arranged so as to face each other without being interconnected;
Figure 9 is a side view of the two hub halves in the uncoupled condition;
Figure 10 is a perspective view of a hub half;
Figure 11 is a plan view of the hub half according to Figure 10.

In the examples of embodiment that follow, individual characteristics, given in relation to specific examples, may actually be interchanged with other different characteristics that exist in other examples of embodiment.

With reference to the figures, the reference numeral 1 designates a sprocket, particularly for conveyor belts or chains.

The sprocket 1 comprises a spur gear 2, which is constituted by two mirror-symmetrical spur halves, designated respectively by the reference numerals 3a and 3b, which are substantially semicircular and from the curved outer surface 4 of which a series of teeth 5 protrude radially, said teeth being engageable for example with a conveyor belt or chain, not shown in the accompanying figures. Each one of the two spur halves 3a and 3b has, at the internal surface 6, a polygonal central seat 7 to which two substantially flat end faces 8 are contiguous, said end faces facing each other during use.

Once the two spur halves 3a and 3b have been arranged mutually adjacent at the end faces 8, the central seats 7 form an opening 9.

A recess 11 is formed on each one of the two lateral faces 10 of each one of the spur halves 3a and 3b and surrounds the central seats 7.

At right angles to each one of the end faces 8 there is a first pair of holes 13, which are connected at the region that is adjacent to the recesses 11 to a receptacle 14 for nuts 15.

Each spur half 3a and 3b comprises mutual centering means, constituted advantageously by two or more pairs of pins 16 and by two or more pairs of complementarily shaped second holes 17, which respectively protrude and are formed at the end faces 8.

Each pin of a spur half faces, during use, one of the second holes 17 formed in the other spur half.

The spur 1 further comprises interconnection means for detachably interconnecting the two spur halves 3a and 3b and for locking a hub 18, which are constituted advantageously by four pins 19, which can be interposed between the end faces 8 and have free ends which are threaded complementarily with respect to the nuts 15.

The hub 18 can be accommodated at the opening 9 of the spur gear 2 and is divided into two hub halves, designated respectively by the reference numerals 20a and 20b, which are shaped complementarily with respect to the central seats 7. Said hub halves advantageously are approximately shaped like an inverted letter C.

The hub halves 20a and 20b which constitute the hub 18 have, on their mutually facing surfaces, a radial slot 21 for keying a shaft, not shown in the accompanying figures, for example by interposing at least one key 22.

Operation is therefore as follows: with reference to the cited figures, the two hub halves 20a and 20b which constitute the hub 18 are arranged mutually adjacent and are then arranged within the central seat 7 formed by arranging mutually adjacent the two spur halves 3a and 3b after positioning one end of the pins 19 thereat.

As an alternative, each hub half is inserted in the corresponding spur half, locking therein by way of the mutual opposition of tolerances between the corresponding surfaces of the hub half and of the corresponding central seat 7; two spur halves are thus formed which are then mutually interconnected by interposing and locking the nuts 15.

The spur halves are thus mutually interconnected, locking the hub 18, by tightening the remaining nuts 15, laterally to the resulting sprocket, therefore without acting on its outer surface 4.

The hub 18 is therefore rotationally coupled to the spur gear 2 by way of the shape interference with respect to the central seat 7.

It has thus been found that the invention has achieved the intended aim and objects, a modular spur gear having been provided, particularly for conveyor belts or chains, in which the mutual locking of the hub and of the spur gear occurs by way of an interference which does not require providing holes radially to the spur gear.

The connection between the spur year and the hub occurs easily and rapidly, since it can be performed by acting on the means provided laterally to the spur gear and not radially thereto.

The simplicity, safety and speed of the provision of the interconnection can also be provided by personnel that is not particularly trained.

Finally, the absence of means for radial connection to the spur gear allows to obtain a sprocket which is free from problems of jamming with a conveyor belt or chain associated therewith, since said sprocket is free from machinings that might weaken its structure, so as to increase its operating lifespan.

The invention is of course susceptible of numerous modifications and variations.

The materials used, as well as the dimensions that constitute the individual components of the invention, may of course be more pertinent according to the specific requirements.

The various means for performing certain different functions need not certainly coexist only in the illustrated embodiment but can be present per se in many embodiments, including ones that are not illustrated. The characteristics indicated as advantageous, convenient or the like might also be omitted or be replaced with equivalents.

## Claims

1. A modular sprocket, particularly for conveyor belts or chains, comprising a spur gear (2), which is constituted by two spur halves (3 a, 3b), between which an opening (9) is provided which can accommodate internally a hub (18) divided into two hub halves (20a, 20b), said opening (9) having a polygonal cross-section, which is shaped complementary with respect to said hub (18), means (19) for interconnecting said spur halves (3a, 3b) and for locking said hub (18) being provided which can be accessed laterally with respect to said sprocket (1), said two spur halves (3a, 3b) being mutually mirror-symmetrical and substantially semicircular, each one of said two spur halves (3a, 3b) having, at its internal surface, a polygonal central seat (7) to which two end faces (8) are contiguous, said end faces (8) of said two spur halves (3a,3b) being substantially flat and arranged so as to face each other during use,
**characterized in that**
a recess (11) which surrounds said central seats (7) is formed on each one of the two lateral faces (10) of each one of said spur halves (3a, 3b), and
two first holes (13) are formed at right angles to each one of said end faces (8) and are each connected, at the region adjacent to said recesses (11), to a receptacle (14) for nuts (15).

2. The sprocket according to claim 1, **characterized in that** said central seats (7) form said opening (9) having a polygonal cross-section once said two spur halves (3a, 3b) have been arranged mutually adjacent at said end faces (8).

3. The sprocket according to claim 1, **characterized in that** each one of said spur halves (3a, 3b) comprises means for mutual centering, which are constituted by two or more pairs of pins (16) and by two or more pairs of complementarily shaped second holes (17), which respectively protrude from, and are formed at, said end faces (8).

4. The sprocket according to claim 3, **characterized in that** each one of said pins (16) of one of said spur halves (3a, 3b) faces, during use, one of said second holes (17) provided in the other spur half.

5. The sprocket according to claim 4, **characterized in that** it comprises means for the detachable interconnection of said two spur halves (3a, 3b) and for locking said hub, said interconnection means being constituted advantageously by four pins (19), which can be interposed between said end faces (8) and have free ends which are threaded complementarily with respect to said nuts (15).

6. The sprocket according to claim 5, **characterized in that** said hub (18) is adapted to be accommodated at said opening (9) and is divided into two hub halves (20a, 20b), which are shaped complementarily with respect to said central seats (7), said hub halves (20a, 20b) advantageously being shaped approximately like an inverted letter C.

7. The sprocket according to claim 6, **characterized in that** said hub halves (20a, 20b) have, on their mutually facing surfaces, a radial slot (21) for keying a shaft preferably by interposing at least one key (22).

## Patentansprüche

1. Modulares Zahnrad, insbesondere für Förderbänder oder Förderketten, umfassend ein Stirnrad (2), welches aus zwei Stirnradhälften (3a, 3b) gebildet ist, zwischen denen eine Öffnung (9) vorgesehen ist, welche innen eine in zwei Nabenhälften (20a, 20b) geteilte Nabe (18) aufnehmen kann, wobei diese Öffnung (9) einen vieleckigen Querschnitt hat, welcher bezüglich der Nabe (18) komplementär geformt ist, wobei Mittel (19) zur Verbindung der Stirnradhälften (3a, 3b) und zur Verriegelung der Nabe (18) vorgesehen sind, welche bezüglich des Zahnrads (1) seitlich zugänglich sind, wobei die zwei Stirnradhälften (3a, 3b) gegenseitig spiegelsymmetrisch und im Wesentlichen halbkreisförmig sind, wobei jede der zwei Stirnradhälften (3a, 3b) an ihrer inneren Oberfläche eine vieleckige zentrale Aufnahme (7) aufweist, an die zwei Stirnflächen (8) angrenzen,
wobei die Stirnflächen (8) der zwei Stirnradhälften (3a, 3b) im Wesentlichen flach und so angeordnet sind, dass sie im Gebrauch einander gegenüberstehen,
**dadurch gekennzeichnet, dass**
eine Aussparung (11), welche die zentralen Aufnahmen (7) umgibt, in jeder der zwei Seitenflächen (10) jeder der Stirnradhälften (3a, 3b) gebildet ist, und
zwei erste Löcher (13) in rechten Winkeln zu jeder der Stirnflächen (8) gebildet sind und in dem den Aussparungen (11) benachbarten Bereich jeweils mit einer Aufnahme (14) für Muttern (15) verbunden sind.

2. Zahnrad gemäss Anspruch 1, **dadurch gekennzeichnet, dass** die zentralen Aufnahmen (7) die Öffnung (9) mit einem vieleckigen Querschnitt bilden, wenn die zwei Stirnradhälften (3a, 3b) mit den Stirnflächen (8) gegenseitig benachbart angeordnet worden sind.

3. Zahnrad gemäss Anspruch 1, **dadurch gekennzeichnet, dass** jede der Stirnradhälften (3a, 3b) Mittel für die gegenseitige Zentrierung umfasst, die durch zwei oder mehrere Paare von Stiften (16) und durch zwei oder mehrere Paare komplementär geformter zweiter Löcher (17) gebildet sind, die von den Stirnflächen (8) vorstehen bzw. an den Stirnflächen (8) gebildet sind.

4. Zahnrad gemäss Anspruch 3, **dadurch gekennzeichnet, dass** jeder der Stifte (16) einer der Stirnradhälften (3a, 3b) bei der Verwendung einem der in der anderen Stirnradhälfte vorgesehenen zweiten Löcher (17) gegenübersteht.

5. Zahnrad gemäss Anspruch 4, **dadurch gekennzeichnet, dass** es Mittel für die lösbare Verbindung der zwei Stirnradhälften (3a, 3b) und zum Verriegeln der Nabe umfasst, wobei die Verbindungsmittel vorteilhafterweise durch vier Stifte (19) gebildet sind, die zwischen den Stirnflächen (8) eingefügt werden können und die freie Enden mit zu den Muttern (15) komplementären Gewinden haben.

6. Zahnrad gemäss Anspruch 5, **dadurch gekennzeichnet, dass** die Nabe (18) so ausgebildet ist, dass sie von der Öffnung (9) aufgenommen werden kann und in zwei Nabenhälften (20a, 20b) geteilt ist, welche bezüglich der zentralen Aufnahmen (7) komplementär geformt sind, wobei die Nabenhälften (20a, 20b) vorteilhafterweise in etwa wie ein umgekehrter Buchstabe C geformt sind.

7. Zahnrad gemäss Anspruch 6, **dadurch gekennzeichnet, dass** die Nabenhälften (20a, 20b) an den sich gegenüberliegenden Flächen einen radialen Schlitz (21) zur Befestigung einer Welle aufweisen, vorzugsweise durch Einfügen mindestens eines Keils (22).

## Revendications

1. Roue dentée modulaire, en particulier pour des courroies transporteuses ou chaînes transporteuses, comprenant un engrenage cylindrique (2), qui est constitué par deux moitiés de cylindre (3a, 3b), entre lesquelles est prévue une ouverture (9) qui peut loger de façon interne un moyeu (18) divisé en deux moitiés de moyeu (20a, 20b), ladite ouverture (9) ayant une section polygonale, qui est de forme complémentaire à celle dudit moyeu (18), des moyens (19) pour relier mutuellement lesdites moitiés de cylindre (3a, 3b) et pour verrouiller ledit moyeu (18) étant prévus, auxquels il est possible d'accéder latéralement par rapport à ladite roue dentée (1), lesdites deux moitiés de cylindre (3a, 3b) étant mutuellement symétriques et sensiblement semi-circulaires, chacune desdites deux moitiés de cylindre (3a, 3b) ayant, au niveau de sa surface interne, un siège central polygonal (7) auquel deux faces d'extrémité (8) sont contiguës, lesdites faces d'extrémité (8) desdites deux moitiés de cylindre (3a, 3b) étant sensiblement plates et agencées de sorte à se faire face en utilisation,
**caractérisée en ce que**
un évidement (11) qui entoure lesdits sièges centraux (7) est formé sur chacune des deux faces latérales (10) de chacune desdites moitiés de cylindre (3a, 3b), et
deux premiers trous (13) sont prévus à angle droit par rapport à chacune desdites faces d'extrémité (8) et sont chacun raccordés, au niveau de la région adjacente auxdits évidements (11), à un logement (14) pour des écrous (15).

2. Roue dentée selon la revendication 1, **caractérisée en ce que** lesdits sièges centraux (7) forment ladite ouverture (9) ayant une section polygonale une fois que lesdites deux moitiés de cylindre (3a, 3b) sont disposées mutuellement adjacentes auxdites faces d'extrémité (8).

3. Roue dentée selon la revendication 1, **caractérisée en ce que** chacune desdites moitiés de cylindre (3a, 3b) comprend des moyens de centrage mutuel, qui sont constitués de deux paires ou plus de goupilles (16) et de deux paires ou plus de seconds trous de forme complémentaire (17), qui font respectivement saillie desdites faces d'extrémité (8) et sont formés au niveau de celles-ci.

4. Roue dentée selon la revendication 3, **caractérisée en ce que** chacune desdites goupilles (16) de l'une desdites moitiés de cylindre (3a, 3b) fait face, en utilisation, à l'un desdits seconds trous (17) prévu dans l'autre moitié de cylindre.

5. Roue dentée selon la revendication 4, **caractérisée en ce qu'**elle comprend des moyens pour relier avec faculté de détachement lesdites deux moitiés de cylindre (3a, 3b) et pour verrouiller ledit moyeu, lesdits moyens pour relier avec faculté de détachement étant constitués avantageusement de quatre goupilles (19), qui peuvent être interposées entre lesdites faces d'extrémité (8) et comportent des extrémités libres filetées de façon complémentaire par rapport auxdits écrous (15).

6. Roue dentée selon la revendication 5, **caractérisée en ce que** ledit moyeu (18) est adapté pour être logé au niveau de ladite ouverture (9) et est divisé en deux moitiés de moyeu (20a, 20b) qui sont de forme complémentaire par rapport auxdits sièges centraux (7), lesdites moitiés de moyeu (20a, 20b) étant avantageusement formées approximativement comme un C inversé.

7. Roue dentée selon la revendication 6, **caractérisée en ce que** lesdites moitiés de moyeu (20a, 20b) ont, sur leurs surfaces se faisant mutuellement face, une fente radiale (21) pour claveter un arbre, de préférence par interposition d'au moins une clavette (22).
